(19) **Europäisches Patentamt / European Patent Office / Office européen des brevets**

(11) **EP 2 664 787 A1**

(12) # EUROPEAN PATENT APPLICATION
published in accordance with Art. 153(4) EPC

(43) Date of publication:
**20.11.2013 Bulletin 2013/47**

(21) Application number: **11840724.6**

(22) Date of filing: **11.11.2011**

(51) Int Cl.:
*F03B 13/06* [(2006.01)]     *E02B 9/00* [(2006.01)]

(86) International application number:
**PCT/ES2011/000328**

(87) International publication number:
**WO 2012/066160 (24.05.2012 Gazette 2012/21)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.11.2010 ES 201001492**

(71) Applicant: **González Martín, Domingo
15008 A Coruña (ES)**

(72) Inventor: **González Martín, Domingo
15008 A Coruña (ES)**

(54) **HYDROELECTRIC PROCESS FOR ELECTRIC ENERGY PRODUCTION**

(57)     The procedure falls within the technical sector of central power production, more specifically in hydro pump.

The battery of pumps (1) draws water (fresh or salt) of the tank (3) and discharge into the V-shaped channel (2) in the discharge channel is installed a turbine (4) connected to an electrical generator ( 5). The turbine evacuates the tank (3). Applying to diagram 1 and 2, the power calculation formulas in the inlet and outlet of the channel and establishing the relation we obtain

$$P_2 = C_{pt}/C_{pb} \ S^2_1/S^2_2 \ \ P_1$$

Where

$P_2$ = Power at the output of the canal en KW

$C_{pt}$ = Power coeficient of the turbine

$C_{pb}$ = Power coeficient of the pumps

$S^2_1$ = Output sweep area m$^2$

$S^2_2$ = Output sweep area in m$^2$

$P_1$ = Input power at the canal in KW

With this procedure you can get hydrogen at most economical prices, that oil. $CO_2$ pollution is reduced to virtually zero..

The procedure can be used in all sectors of industry and particularly in those where consumption is significant.

DIAGRAM nº 2

**Description**

**Technical sector**

The procedure falls within the technical sector of central power production, more specifically into hydro pumping.

**Prior Art**

Currently, depending on the kind of primary energy used, we have the following types: *Hydroelectric power stations* when the energy-producing machines are controlled by hydraulic turbines. *Centrales Plants* are divided into *water,* in which there is no possibility of accumulation of liquid, whereby all the water received is used without time *intervals, central reservoir* in which it is possible to conserve water in reservoirs constructed above, water can be used at the any desired time using *pumping stations,* water is pumped from a lower reservoir to a higher one, usually pumped when the mains consumption is lower and turbine when consumption is bigger. *thermal,* when the machines are steam drive (generally turbines) or internal combustion engines. Depending on the natural resources used to produce steam, we have coal power plants, power stations and oil-fired power plants or combined cycle gas. *Atomic or nuclear stations*, are those that use the energy produced by the transmutation of atom to produce heat. *geothermoelectric,* are taking advantage of the vapor evolved spontaneously from the earth's natural heat. *Renewables* are those that use the energy produced by natural phenomena such as wind, sun, waves, tides etc.

It would be desirable for the environment , that the production of electrical energy did not depend significantly on oil and its derivatives, to avoid speculation that occurs in the sector and $CO_2$ emissions to the atmosphere.

The present invention uses as a primary energy, the electrical energy network, to move battery pumps, recirculating water (fresh or salt) from a reservoir to a V-shaped canal, located in the upper part. The discharge canal, connects a turbine that hydraulically drained the tank.

As energy is proportional to the square of the speed, the output power will be greater than at the input. A process working on the conditions set, auto feed mains and regulate, avoiding dependence on oil and emissions of $CO_2$.

**Detailed description of the invention.**

The formula to calculate the useful power is:

$$P_u = C_p \ 1/2 \ \rho \ Q \ V^2 = C_p \ 1/2 \ \rho \ S \ V^3$$

where

$P_u$ = Power output
Q = Flow
$C_p$ = Coefficient of power
p = Density
V = Speed
S = Swept area

Applying the formula to the process diagram # 1 it has the following power for joining the canal ($S_1$)

$$P_1 = C_{pb} 1/2 * 10 Q_1 V^2_1 = C_{pb} 1/2 * 10 S_1 V^3_1$$

Where

$P_1$ = Power in the entrance of the canal (KW)
$C_{pb}$ = 0,6 a 2,4
$Q_1$ = Flow in the entrance of the canal $m^3$/seg.
$S_1$ = input sweep area $m^2$
$V_1$ = Velocity in the entrance of the canal m/seg.

Output of the canal ($S_2$)

$$P_2 = C_{pt} \, 1/2 * 10 Q_2 \, V^2_2 = C_{pt} 1/2 * 10 S_2 V^3_2$$

Where

$P_2$ = Power in the output of the canal KW
$C_{pt}$ = 0,05 a 0,1
$Q_2$ = Flow in the output of the canal m³/seg.
$S_2$ = Output sweep area m2
$V_2$ = Velocity in the output of the canal

If we divide the output power of the canal ($P_2$) at the input power ($P_1$) we have:

$$P_2 / P_1 = C_{pt} / C_{pb} \, V^2_2 / V^2_1 = C_{pt} / C_{pb} \, S_2 / S_1 \, V^3_2 / V^3_1$$

The flow at the input is the same as the flow in the output, then

$$Q_1 = Q_2 \quad \text{as} \quad Q = SV$$

$$S_1 V_1 = S_2 V_2 \quad y \quad V_2 = S_1 V_1 / S_2$$

Substituting we have

$$P_2 / P_1 = C_{pt} / C_{pb} \, S^2_1 / S^2_2$$

where

$$P_2 = C_{pt} / C_{pb} \, S^2_1 / S^2_2 \; P_1$$

$$S_1 = n S_b \quad y \quad P_1 = n P_b$$

Substituting we have

$$P_2 = C_{pt} / C_{pb} \, n^3 \, S^2_b / S^2_2 \, P_b$$

n = number of pumps
$S_b$ = Area pump discharge
$P_b$ = Pump power in KW

If $S_2 = 0,1S_1$

$$P_2 = C_{pt}/C_{pb} \, 100 \, P_1$$

$$V_2 = 10 \, V_1$$

if $S_2 = 0,05S_1$

$$P_2 = C_{pt}/C_{pb} \, 400 \, P_1$$

$$V_2 = 20 \, V_1$$

As can be seen if $S_2$ is equal to 10% of $S_1$ the power turbine is one hundred (100) times greater than the pump power and the output speed is ten (10) times greater than the input.

And if $S_2$ its equal to 5% of $S_1$ the turbine power is four hundred (400) times greater than the pump power and the output speed is twenty (20) times greater than the input.

With this procedure you can get hydrogen at more economical prices that oil. Pollution is reduced to virtually zero.

The procedure can be used in all sectors of industry and particularly in those where consumption is significant.

Diagram n° 1 and 2

The battery of pumps (1) draws water (fresh or salt) of the tank (3) and discharge into the V-shaped canal (2) in the discharge canal is installed a turbine (4) connected to an electrical generator ( 5). The turbine evacuates the tank (3).

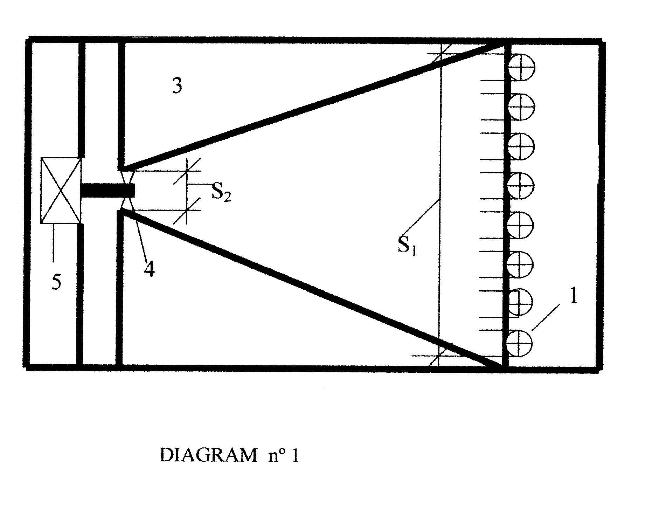

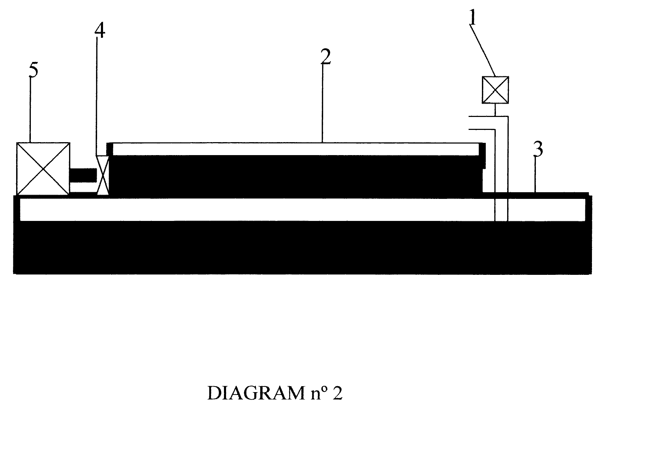

**Claims**

1. A process for continuous production of electrical energy using the kinetic energy of water, produced by the recirculation of water in a canal with inlet section larger than the outlet section.
   A method **comprising** the following steps:

   - The battery of motor pumps, propeller pump from lower tank, the canal of input section larger than the output section. Electric motors, three-phase pumps are connected to the mains transformer, isolator, measurement and protection equipment.
   - In the canal input section larger than the output section, water, increases its velocity at the outlet section. With suitable dimensioning, the speed can be achieved and desired kinetic energy would we obtained.
   - The kinetic energy of water is converted into mechanical energy in the turbine, horizontal or vertical axis. The turbine can be directly coupled to the electric generator or multiplier. The mechanical energy of the turbine is converted into electrical energy in the generator. The electric generator, three phase, can be synchronous or asynchronous.. If we use the asynchronous generator is recommended with rotor in short circuit and full load regenerative converter to connect to the mains transformer, isolator, measurement and protection equipment. The electrical power is regulated by acting on the flow of recirculating water.. Turbine evacuates the lower tank.

DIAGRAM n° 1

DIAGRAM n° 2

<table>
<tr><td colspan="2" align="center">**INTERNATIONAL SEARCH REPORT**</td><td>International application No.<br>PCT/ES2011/000328</td></tr>
</table>

A. CLASSIFICATION OF SUBJECT MATTER

*F03B13/06* (2006.01)
*E02B9/00* (2006.01)
According to International Patent Classification (IPC) or to both national classification and IPC

B. FIELDS SEARCHED

Minimum documentation searched (classification system followed by classification symbols)
F03B, E02B

Documentation searched other than minimum documentation to the extent that such documents are included in the fields searched

Electronic data base consulted during the international search (name of data base and, where practicable, search terms used)

EPODOC, INVENES

C. DOCUMENTS CONSIDERED TO BE RELEVANT

| Category* | Citation of document, with indication, where appropriate, of the relevant passages | Relevant to claim No. |
|---|---|---|
| X | ES 2189629 A1 (ECHEVERRIA GALERA ANSELMO )<br>01/07/2003, the whole document. | 1 |
| X | DE 4301659 A1 (PRIESEMUTH W ) 28/07/1994, Abstract.<br>Figures. | 1 |
| A | JP 2010222875 A (KUBOKI KEIJI ) 07/10/2010,<br>& Abstract from DataBase EPODOC. Retrieved<br>of EPOQUE; AN JP-2009072498-A. Figures | 1 |
| A | US 7478974 B1 (KELLY WILLIAM LOWELL ) 20/01/2009,<br>Abstract. Figures. | 1 |

☐ Further documents are listed in the continuation of Box C.     ☒ See patent family annex.

| | | |
|---|---|---|
| * Special categories of cited documents:<br>"A" document defining the general state of the art which is not considered to be of particular relevance.<br>"E" earlier document but published on or after the international filing date<br>"L" document which may throw doubts on priority claim(s) or which is cited to establish the publication date of another citation or other special reason (as specified)<br>"O" document referring to an oral disclosure use, exhibition, or other means.<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other documents , such combination being obvious to a person skilled in the art<br>"&" document member of the same patent family | |
| Date of the actual completion of the international search<br>06/02/2012 | Date of mailing of the international search report<br>**(21/03/2012)** | |
| Name and mailing address of the ISA/<br><br>OFICINA ESPAÑOLA DE PATENTES Y MARCAS<br>Paseo de la Castellana, 75 - 28071 Madrid (España)<br>Facsimile No.: 91 349 53 04 | Authorized officer<br>M. López Carretero<br><br><br>Telephone No. 91 3498430 | |

Form PCT/ISA/210 (second sheet) (July 2009)

**EP 2 664 787 A1**

## INTERNATIONAL SEARCH REPORT

Information on patent family members

| International application No. |
| --- |
| PCT/ES2011/000328 |

| Patent document cited in the search report | Publication date | Patent family member(s) | Publication date |
| --- | --- | --- | --- |
| ES2189629 AB | 01.07.2003 | NONE | |
| DE4301659 A | 28.07.1994 | NONE | |
| US7478974 B | 20.01.2009 | CA2647515 A <br> CN101560941 A | 17.10.2009 <br> 21.10.2009 |
| JP2010222875 A | 07.10.2010 | JP4669899B2 B | 13.04.2011 |

Form PCT/ISA/210 (patent family annex) (July 2009)